# FASCICULE DE BREVET EUROPEEN

(11) **EP 3 138 104 B1**
(45) Date de publication et mention de la délivrance du brevet: **05.02.2020**
(21) Numéro de dépôt: 15726230.4
(22) Date de dépôt: 22.04.2015
(51) Int. Cl.: G21C 19/07, G21F 7/005, G21C 19/02, G21C 19/32

(54) **DISPOSITIF D'OUVERTURE ET DE FERMETURE D'UN ORIFICE AU FOND D'UNE PISCINE DESTINÉE À CONTENIR DU COMBUSTIBLE IRRADIÉ**
VORRICHTUNG ZUM ÖFFNEN UND SCHLIESSEN EINER ÖFFNUNG AM BODEN EINES BECKENS ZUM EINDÄMMEN VON BESTRAHLTEM BRENNSTOFF
DEVICE FOR OPENING AND CLOSING AN OPENING IN THE BOTTOM OF A POOL INTENDED FOR CONTAINING IRRADIATED FUEL

(30) Priorité: 28.04.2014 FR 1400992
(43) Date de publication de la demande: 08.03.2017
(73) Titulaire: CNIM Groupe, 75008 Paris (FR)
(72) Inventeur: LEGAIGNOUX, Hervé, F-83330 Le Beausset (FR)
(74) Mandataire: Thinat, Michel
(86) Numéro de dépôt international: PCT/FR2015/051095
(87) Numéro de publication internationale: WO 2015/166168

(56) Documents cités:
- JP-A- S54 142 000
- JP-A- S60 260 891
- US-A- 4 519 519

## Description

Dispositif d'ouverture et de fermeture d'un orifice au fond d'une piscine destinée à contenir du combustible irradié

La présente invention concerne un dispositif d'ouverture et de fermeture d'un orifice du fond d'une piscine destinée à contenir du combustible irradié pouvant être transféré dans un conteneur situé sous cet orifice.

Le combustible irradié d'un réacteur nucléaire ou d'une usine de retraitement de combustible est immergé dans la piscine ou fosse dont l'orifice de fond peut être ouvert pour charger en combustible irradié chaque conteneur amené sous l'orifice de la fosse.

JP S60 260891 A divulgue un dispositif d'ouverture et de fermeture d'un orifice d'un conteneur (11) de combustible irradié. Ce conteneur est transporté dans une piscine moyennant une cage. On connaît aussi un dispositif de fermeture de l'orifice de fond d'une piscine chargée en combustible irradié et qui comprend un couvercle fermant de manière étanche l'orifice, lequel couvercle est actionné par un mécanisme de contrepoids pouvant être soulevé par un treuil sécurisé pour ouvrir l'orifice de la piscine.

Ce dispositif connu assure efficacement les fonctions de maintien de la pression sur les joints d'étanchéité du couvercle lorsque ce dernier occupe sa position de fermeture de l'orifice de la piscine et de sécurisation du couvercle en position d'ouverture de l'orifice afin d'éviter toute fermeture accidentelle qui pourrait endommager les assemblages de combustible irradié.

Cependant, ce dispositif connu a pour inconvénients d'être une structure extrêmement complexe, notamment par le grand nombre de pièces immergées dans la piscine et, par conséquent, d'être extrêmement coûteux. En outre, il présente un risque très grave d'endommagement des assemblages de combustible irradié en cas de chute accidentelle du couvercle lors de l'opération de chargement du conteneur situé sous la piscine et, pour réduire autant que possible ce risque, le mécanisme de treuil doit être muni de plusieurs moyens de sécurité tels qu'un verrouillage antisismique, un double câble, etc., ce qui accroit la complexité et les coûts du dispositif.

La présente invention a pour but de palier les inconvénients ci-dessus de l'art antérieur.

A cet effet, selon l'invention, le dispositif d'ouverture et de fermeture d'un orifice du fond d'une piscine destinée à contenir du combustible irradié pouvant être transféré dans un conteneur situé sous l'orifice, du type comprenant un couvercle et une structure logée dans la piscine permettant de déplacer le couvercle entre une position de fermeture et une position d'ouverture de l'orifice, est caractérisé en ce que la structure comprend un bâti monté à pivotement commandé suivant un axe vertical à une paroi de la piscine et supportant un mât vertical portant à son extrémité inférieure le couvercle et qui peut être commandé à déplacement verticalement guidé relativement au bâti de support, lorsque ce dernier occupe une position à laquelle le mât vertical est sensiblement coaxial à l'orifice au-dessus de celui-ci, entre une position basse à laquelle le couvercle obture l'orifice et une position haute à laquelle le couvercle est soulevé à une position dégagée d'au-dessus de l'orifice.

De préférence, le bâti de support peut être commandé pour pivoter avec le couvercle, lorsque ce dernier occupe sa position dégagée d'au-dessus de l'orifice, à une position de repos à laquelle le couvercle est complètement désengagé de l'orifice ouvert.

En outre, le bâti de support peut être commandé pour pivoter avec le couvercle à partir de sa position de repos à une position à laquelle le couvercle est disposé au-dessus de l'orifice et le mât est commandé pour se déplacer verticalement vers le bas et plaquer le couvercle sur le fond de la piscine pour obturer l'orifice.

En position de repos du bâti de support, le mât peut être commandé pour se déplacer en translation verticalement vers le bas afin de disposer le couvercle en appui sur le fond de la piscine.

Avantageusement, le mât comporte un moyen permettant d'exercer sur le couvercle une pression de maintien de couvercle à sa position de fermeture de l'orifice de la piscine.

Ce moyen de pression comprend un organe élastiquement déformable logé dans le mât coaxialement à celui-ci entre deux parties supérieure et inférieure du mât et apte à exercer sur la partie inférieure du mât un effort axial de compression maintenant sous pression le couvercle à sa positon de fermeture de l'orifice.

Avantageusement, l'organe élastiquement déformable est logé dans une chambre de la partie inférieur du mât et en-dessous d'un piston logé dans la chambre et solidaire de la partie supérieure du mât.

Avantageusement, l'organe élastiquement déformable est constitué par un empilement de ressorts disques dans la chambre de la partie inférieure du mât.

De préférence, les moyens de commande du pivotement du bâti de support du mât vertical comprennent un moteur électrique solidaire d'un plancher en partie supérieure de la piscine, un vérin à vis horizontal accouplé au moteur électrique et un bras horizontal de pivotement solidaire en partie supérieure du bâti de support du mât et pouvant pivoter autour d'un axe vertical coaxial à l'axe de pivotement du bâti de support du mât, lequel bras de pivotement est accouplé à une extrémité de la vis du vérin, le moteur électrique pouvant être activé pour entraîner en translation la vis du vérin et provoquer le pivotement du bâti de support du mât par l'intermédiaire du bras de pivotement.

De préférence, les moyens de commande du déplacement vertical du mât comprennent un moteur électrique solidaire en partie supérieure du bâti de support du mât, un vérin à vis vertical accouplé au moteur électrique et à l'extrémité supérieure du mât coaxialement à ce dernier, le moteur électrique pouvant être activé pour entrainer en translation la vis verticale du vérin et provoquer le déplacement vertical du mât relativement à son bâti de support entre ses positions haute et basse.

Avantageusement, le bâti de support du mât est monté pivotant par l'intermédiaire de chapes d'articulation à des traverses horizontales réparties sur la hauteur de la paroi verticale de la piscine en étant solidaires de cette paroi.

Au moins l'une des traverses comprend deux butées réglables de limitation du pivotement du bâti de support du mât respectivement à ses deux positions de repos et de disposition du mât coaxialement à l'orifice de la piscine.

Le fond de la piscine comprend des pieds saillants disposés sur le bord périphérique de l'orifice de la piscine et dans lesquels s'engage le couvercle à sa position de fermeture de cet orifice.

Le fond de la piscine comprend d'autres pieds saillants dans lesquels s'engage le couvercle à sa position de repos hors de l'orifice.

L'invention sera mieux comprise, et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels :
- la figure 1 est une vue de côté d'une piscine d'une centrale nucléaire pourvue d'un dispositif de l'invention permettant la fermeture d'un orifice au fond de la piscine à l'aide d'un couvercle occupant sa position de fermeture sous pression de cet orifice ;
- la figure 2 est une vue de côté semblable à celle de la figure 1 et représentant le dispositif occupant une position à laquelle le couvercle est à sa position relâchée de fermeture de l'orifice de fond de la piscine ;
- la figure 3 est une vue de côté semblable à celle de la figure 1 et représentant le dispositif occupant sa position haute de dégagement du couvercle d'au dessus de l'orifice de fond de la piscine ;
- la figure 4 est une vue partielle de dessus suivant la flèche IV de la figure 1 ;
- la figure 5 est une vue agrandie de la partie cerclée en V de la figure 3 ;
- la figure 6 est une vue agrandie de la partie cerclée en VI de la figure 2 ;
- la figure 7 est une vue agrandie de la partie cerclée en VII de la figure 1 ;
- la figure 8 est une vue en coupe suivant la ligne VIII-VIII de la figure 1 ;
- la figure 9 est une vue en coupe suivant la ligne IX-IX de la figure 1 ;
- la figure 10 est une vue de dessus suivant la flèche X de la figure 3 ; et
- la figure 11 est une vue de dessus semblable à celle de la figure 10 et représentant le couvercle de fermeture du dispositif à sa position complètement dégagée de l'orifice de fond de la piscine.

En se reportant aux figures, la référence 1 désigne une piscine d'une installation nucléaire pouvant être remplie d'eau à un niveau maximum symbolisé par la ligne supérieure N relativement au fond 2 de la piscine 1. Des assemblages de combustible irradié, non représentés, sont chargés et immergés dans la piscine 1 et peuvent être transférés au travers d'un orifice 3 du fond 2 de la piscine 1 pour être chargés dans un conteneur, non représenté, situé en dessous de l'orifice 3 en aplomb de ce dernier.

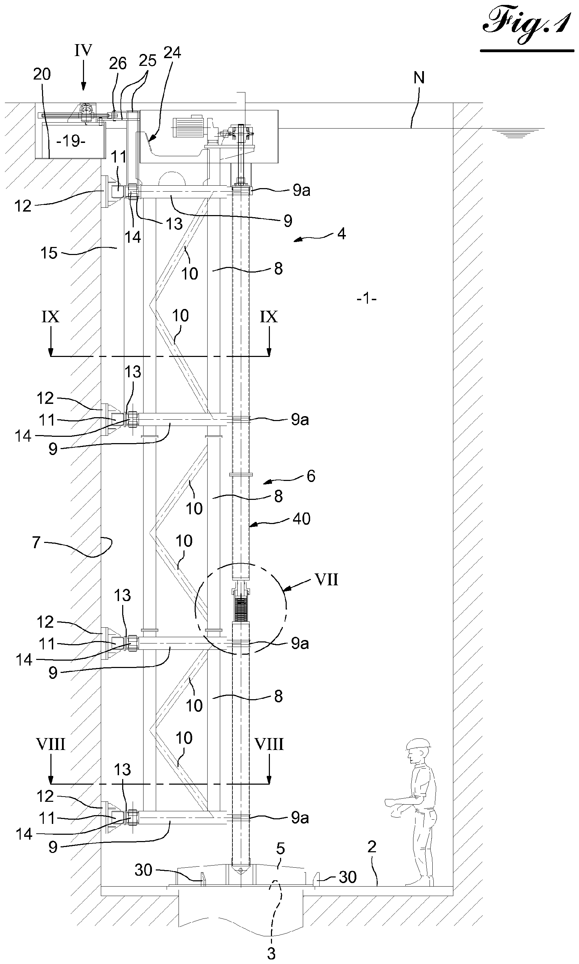

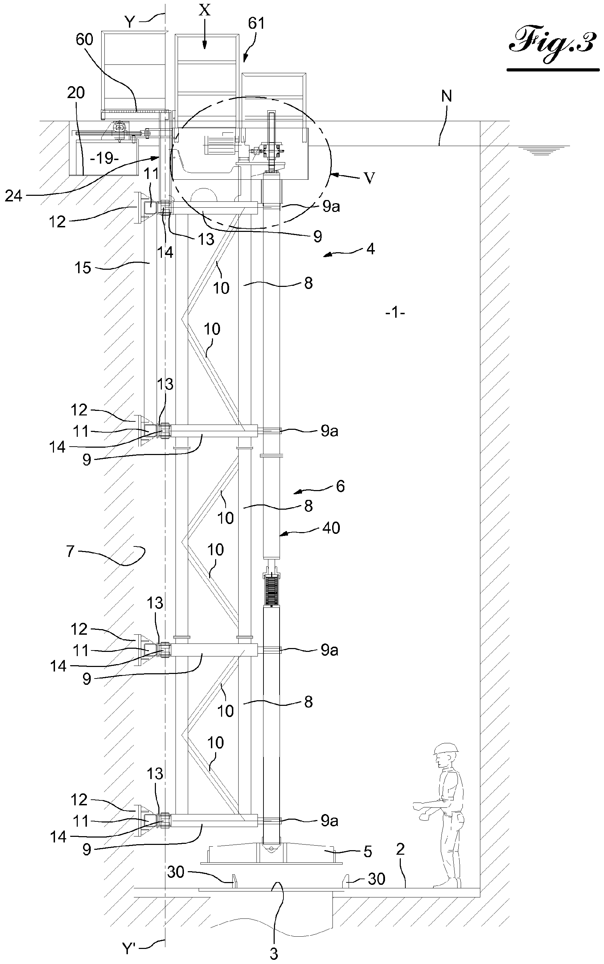

Un dispositif 4 est installé dans la piscine 1 pour permettre à un couvercle 5 d'occuper une position de fermeture étanche sous contrainte de l'orifice 3 du fond 2 de la piscine 1 comme représenté en figure 1 ou pour permettre au couvercle 5 d'occuper une position dégagée d'au dessus de l'orifice 3 comme représenté en figure 3 avant de déplacer le couvercle 5 à une position inactive de repos à laquelle l'orifice 3 est totalement libéré pour permettre le chargement du conteneur en combustible irradié.

Le dispositif 4 est en grande partie immergé dans la piscine 1 jusqu'au niveau N.

Selon l'invention, le dispositif 4 comprend un bâti 6 monté à pivotement commandé autour d'un axe vertical Y-Y' (figure 3) à une paroi verticale en béton 7 du bâtiment dans lequel est formée la piscine 1. A titre d'exemple, le bâti 6 est constitué de trois sections, à savoir une section centrale qui est connectée à deux sections supérieure et inférieure par l'intermédiaire de brides boulonnées afin de faciliter la fabrication et le montage de ce bâti.

Le bâti 6 est constitué d'un assemblage de montants verticaux 8, de traverses horizontales 9 et de poutrelles obliques de rigidification 10 interposées entre deux séries parallèles de montants 8.

Le bâti 6 est fixé à la paroi 7 de la piscine 1 par des traverses horizontales 11 réparties sur la hauteur de la paroi 7 et dans le cas présent au nombre de quatre.

Chaque traverse 11 est fixée à chacune de ses extrémités à la paroi 7 par l'intermédiaire de semelles 12 fixées à la paroi 7 par tout moyen approprié, tel que par exemple des vis de fixation ou un montage mécanosoudé.

Pour assurer le pivotement du bâti 6 autour de l'axe vertical Y-Y', chacune des traverses 9 du bâti 6 a l'une de ses extrémités montée articulée à la traverse horizontale 11 de la paroi 7 par l'intermédiaire d'une chape 13 pouvant être solidaire soit de l'extrémité de la traverse 9 du bâti 6 soit de la traverse horizontale 11 et d'un axe d'articulation 14 traversant la chape 13 pour relier l'extrémité de la traverse 9 du bâti 6 à la traverse horizontale 11 de la paroi 7. Au besoin, il est possible de prévoir un organe de guidage, tel qu'une bague en bronze ou en matériau synthétique, dans chaque chape 13 et autour de l'axe 14 pour assurer un bon guidage en rotation du bâti 6 autour de l'axe Y-Y'.

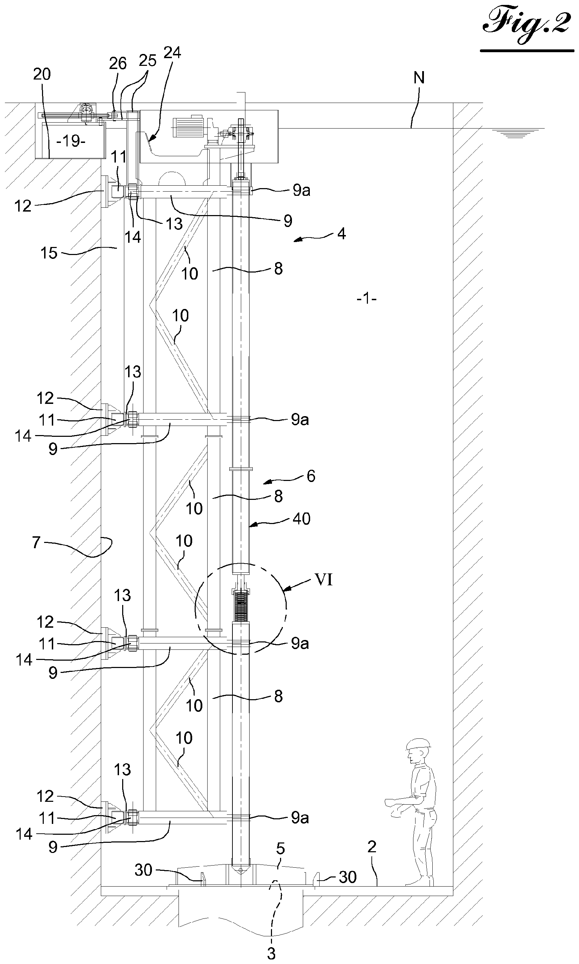

Si nécessaire, au moins deux des traverses horizontales 11 de la paroi 7, par exemple les deux traverses supérieures représentées aux figures 1 à 3, sont pourvues d'au moins un montant vertical de rigidification 15 fixé entre les deux traverses 11 et dans le cas présent au nombre de deux.

Les moyens permettant de commander le pivotement du bâti 6 comprennent un moteur électrique à frein à disque intégré 16 accouplé à un limiteur de couple 17, ainsi qu'un vérin à vis 18 accouplé en sortie du limiteur de couple 17. L'ensemble à moteur électrique 16, limiteur de couple 17 et vérin à vis 18 est solidaire d'un châssis de support 19 lui-même fixé sur un plancher horizontal 20 situé en partie supérieure de la piscine 1.

Le vérin à vis 18 est horizontal et est accouplé à l'ensemble moteur électrique 16 et limiteur de couple 17 de manière que lorsque cet ensemble est activé, la vis 21 du vérin 18 puisse se déplacer en direction horizontale, la vis 21 étant protégée par un couvercle de protection 22. La vis 21 du vérin 18 s'étend ainsi perpendiculairement à l'arbre du moteur électrique 16.

Les moyens de commande de pivotement du bâti 6 comprennent également un bras horizontal 23 dont une extrémité est reliée articulée à une extrémité de la vis 21 du vérin 18 et l'autre extrémité est solidaire d'une structure 24 elle-même solidaire de la partie supérieure du bâti 6 située au-dessus de la traverse supérieure 9 de ce bâti. Le bras 23 est ainsi monté pour lui permettre de pivoter autour de l'axe vertical Y-Y'.

Le bras de pivotement 23 peut être réalisé par deux plaques parallèles rigides 25 solidaires de la structure supérieure 24 du bâti 6 et entre lesquelles est fixé un axe vertical d'articulation 26 auquel est fixée de manière pivotante l'extrémité de la vis 21 du vérin 18.

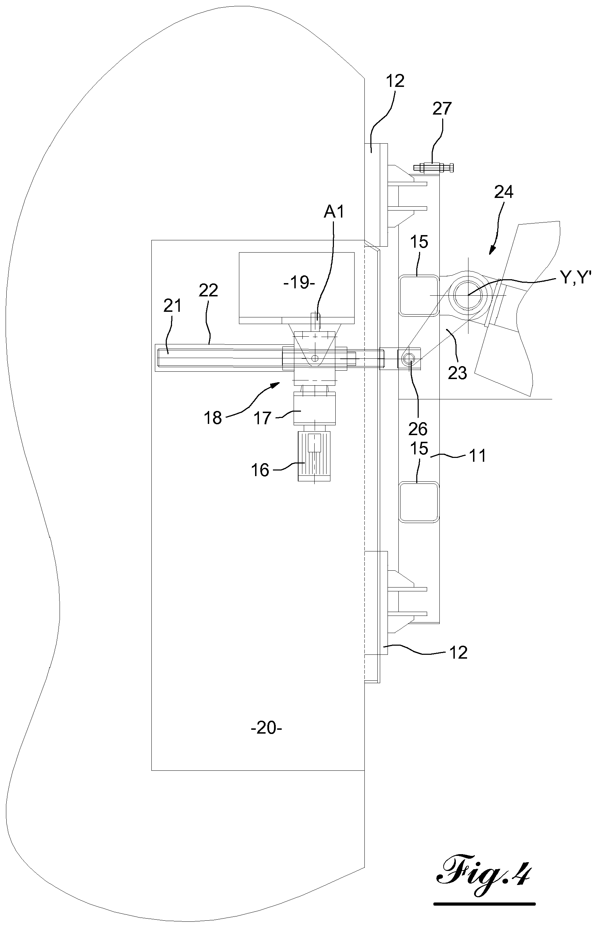

La figure 4 représente la position du bras de pivotement 23 correspondant à la position de fermeture sous pression du couvercle 5 de l'orifice 3 du fond 2 de la piscine 1. A cette position, la vis 21 du vérin 18 est rétractée à droite du moteur électrique 16 en considérant la figure 4, c'est-à-dire que sa partie de plus grande longueur se situe à gauche de ce moteur.

Lorsque le moteur électrique 16 est activé, la vis 21 du vérin 18 est déplacée en translation de la gauche vers la droite en considérant la figure 4 relativement au châssis de support 19 pour provoquer le pivotement du bras 23 dans le sens contraire des aiguilles d'une montre autour de l'axe Y-Y' et, par conséquent effectuer le pivotement du bâti 6 autour de cet axe vers une position angulaire déterminée de repos une fois, bien entendu, le couvercle 5 dégagé de sa position de fermeture d'au-dessus de l'orifice 3 du fond de la piscine 1, comme représenté en figure 3.

L'ensemble à moteur électrique 16, limiteur de couple 17 et vérin à vis 18 comprend également un arbre A1 pouvant être utilisé pour manœuvrer manuellement le vérin à vis 18 et, par conséquent, permettre le pivotement du bâti 6 en mode dégradé, par exemple dans le cas d'absence de courant électrique, de casse du système d'entraînement, etc.

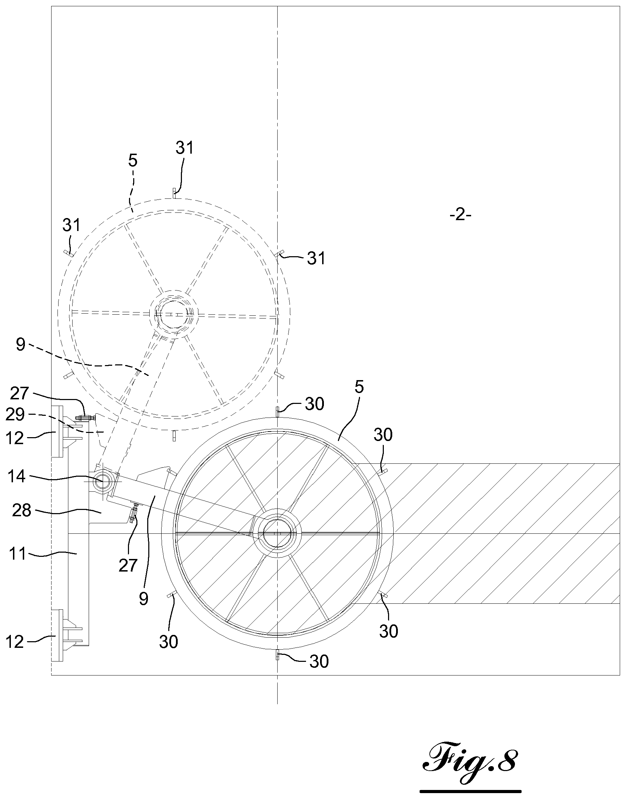

Au moins l'une des traverses murales 11, par exemple la traverse inférieure 11 comme représenté en figure 8, comprend deux butées réglables 27 constituées de préférence par deux vis horizontales, l'une solidaire d'une extrémité de la traverse 11 transversalement à cette dernière et l'autre solidaire d'une plaque horizontale rigide 28 fixée à la traverse 11 de manière que l'autre vis s'étende dans un plan vertical incliné d'un angle déterminé relativement à cette traverse.

Lorsque le bâti 6 occupe sa position à laquelle le couvercle 5 obture l'ouverture 3 du fond 2 de la piscine 1, la traverse inférieure 9 de ce bâti est en appui contre la butée à vis inclinée 27 et lorsque le bâti 6 occupe sa position de repos à laquelle le couvercle 5 est totalement dégagé de l'orifice 3, cette traverse est en appui contre la butée à vis 27 de l'extrémité de la traverse murale 11 par l'intermédiaire d'une plaque 29 solidaire de la traverse 9 comme cela ressort de la figure 8 représentant en pointillés la position de repos du bâti 6 et du couvercle 5.

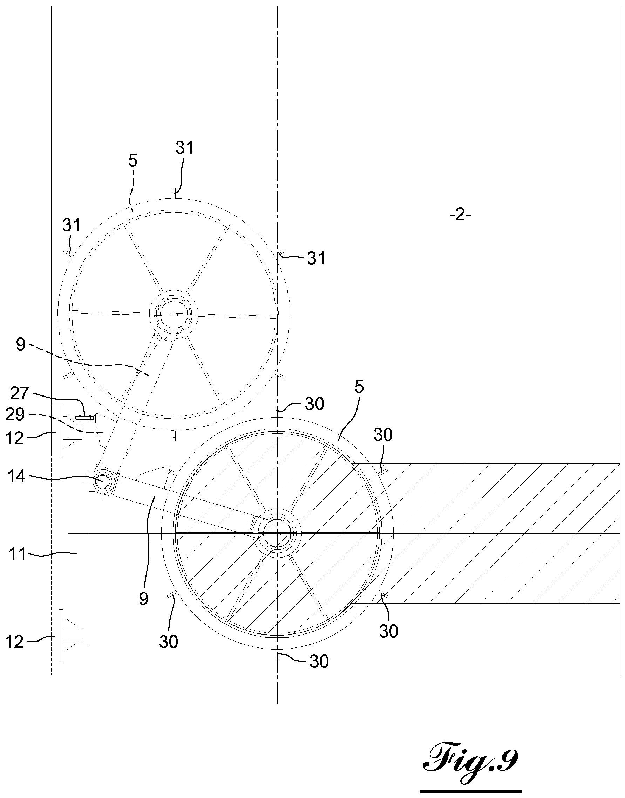

La figure 9 montre qu'une autre des traverses murales 11, dans le cas présent la seconde traverse à partir du haut de la piscine 1, peut comporter au moins une autre butée réglable 27 constituée de préférence par une vis horizontale solidaire d'une extrémité de la traverse 11 transversalement à cette dernière. Cette butée permet d'amener l'ensemble à bâti 6 et couvercle 5 à sa position de repos comme pour la butée 27 de la traverse murale inférieure 11.

Le fond 2 de la piscine 1 comprend plusieurs pieds saillants 30 disposés sur le bord périphérique circulaire de l'orifice 3 de la piscine 1 et dans lesquels s'engage le couvercle 5 lorsqu'il occupe sa position de fermeture de l'orifice 3.

Le fond 2 de la piscine 1 comprend également d'autres pieds saillants 31 dans lesquels s'engage le couvercle 5 sur le fond 2 de la piscine 1 lorsque le bâti 6 et le couvercle 5 occupent leur position de repos à laquelle le couvercle 5 libère totalement l'orifice 3 du fond 2 de la piscine 1.

Les pieds saillants 30,31 ont pour but de reprendre les efforts horizontaux générés par les accélérations sismiques sur les masses du dispositif, notamment ceux du couvercle 5, qui est de masse importante.

Le bâti 6 supporte un mât vertical 40 portant à son extrémité inférieure le couvercle 5. Le mât vertical 40 peut être commandé à déplacement verticalement guidé relativement au bâti de support 6.

A cet effet, le mât vertical 40 est porté par chacune des extrémités des traverses horizontales 9 du bâti 6 en pouvant coulisser dans et transversalement à celles-ci. De préférence, le mât vertical 40 présente en section transversale une forme circulaire et peut coulisser dans les extrémités conjuguées 9a des traverses 9 par l'intermédiaire de paliers, par exemple des bagues en bronze ou en matériau synthétique. A titre d'exemple, le mât 40 peut être constitué de deux parties coaxiales supérieure et inférieure fixées l'une à l'autre par deux brides fixées entre elles par des boulons.

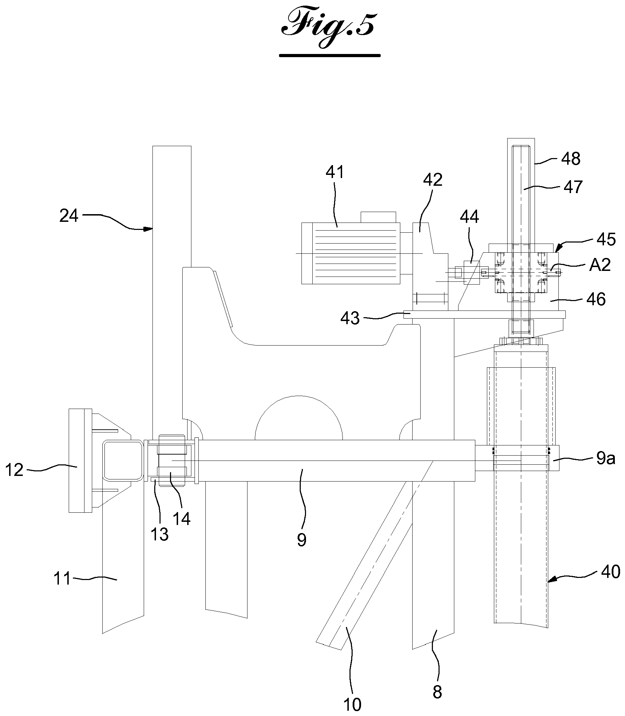

Les moyens permettant de commander le déplacement vertical du mât 40 relativement au bâti 6 comprennent, comme cela ressort mieux de la figure 5, un moteur électrique à frein à disque intégré 41 et un réducteur 42 formant avec le moteur 41 un ensemble motoréducteur solidaire d'une plaque de support horizontale 43 elle-même solidaire de la structure 24 en partie supérieure du bâti 6. La sortie de l'ensemble motoréducteur 41, 42 est accouplée à un limiteur de couple 44 lui-même accouplé à un vérin à vis vertical 45 solidaire de la plaque horizontale 43 par l'intermédiaire d'une plaque verticale 46. Ainsi, le vérin 45 est fixé à la structure par un montage du type « au plafond ».

La vis 47 du vérin 45, qui est protégée par un couvercle de protection 48, s'étend verticalement et a son extrémité inférieure solidaire de l'extrémité supérieure du mât vertical 40 coaxialement à ce dernier.

Lorsque l'ensemble motoréducteur 41, 42 est activé, la vis 47 du vérin 45 est entraînée verticalement en translation pour déplacer en translation le mât vertical 40 dans le sens correspondant imposé par l'ensemble motoréducteur 41, 42 afin d'abaisser ou de soulever le couvercle 5.

Le système de déplacement en translation du mât vertical 40 comprend également un arbre A2 pouvant être utilisé pour manœuvrer manuellement le vérin à vis 45,47 et, par conséquent, permettre le déplacement en translation du mât vertical 40 en mode dégradé, par exemple dans le cas d'absence de courant électrique, de casse du système d'entraînement, etc.

Le mât vertical 40 comporte un moyen permettant d'exercer sur le couvercle 5 une pression de maintien de ce couvercle à sa position de fermeture de l'orifice 3 du fond 2 de la piscine 1.

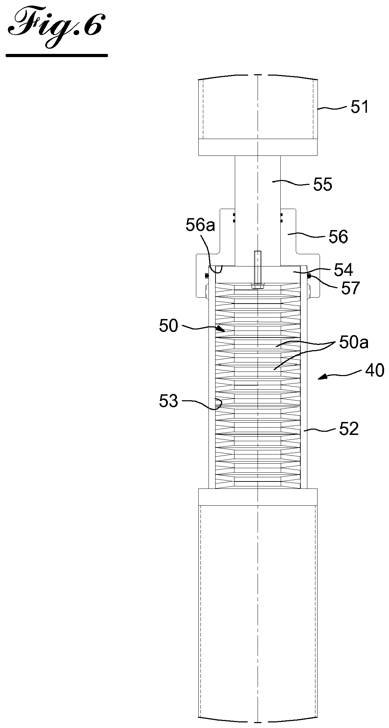

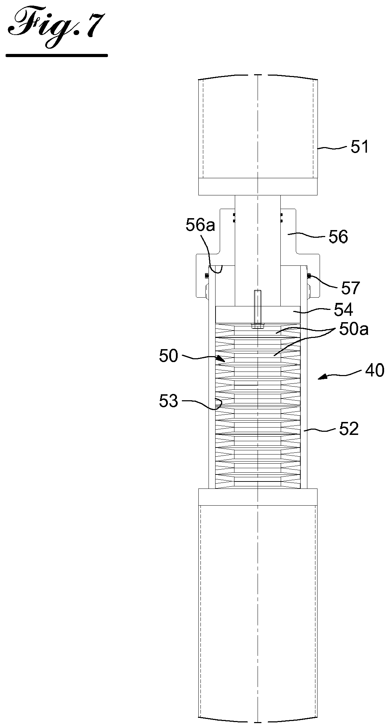

Ce moyen de pression comprend un organe élastiquement déformable 50 mieux visible aux figures 6 et 7 et logé dans le mât 40 coaxialement à celui-ci entre deux parties supérieure 51 et inférieure 52 de ce mât, lequel organe élastiquement déformable 50 est apte à exercer sur la partie inférieure 52 du mât 40 un effort axial et vertical de compression maintenant sous pression le couvercle 5 à sa position de fermeture de l'orifice 3.

L'organe élastiquement déformable 50 est logé dans une chambre 53 de la partie supérieure 52 du mât 40 et est situé en dessous d'un piston 54 logé dans la chambre 53 en partie supérieure de celle-ci et solidaire de la partie supérieure 51 du mât 40 par l'intermédiaire d'une tige 55.

De préférence, l'organe élastiquement déformable 50 est constitué par un empilement de ressorts disques 50a logés dans la chambre 53 et connus en soi.

Un capuchon d'étanchéité 56 est fixé coaxialement autour de la partie d'extrémité supérieure de la partie inférieure 52 du mât 40 avec interposition d'un joint annulaire d'étanchéité 57 entre ce capuchon et cette partie d'extrémité supérieure.

La tige 55 du piston 54 traverse de façon étanche une partie supérieure tubulaire du capuchon 56.

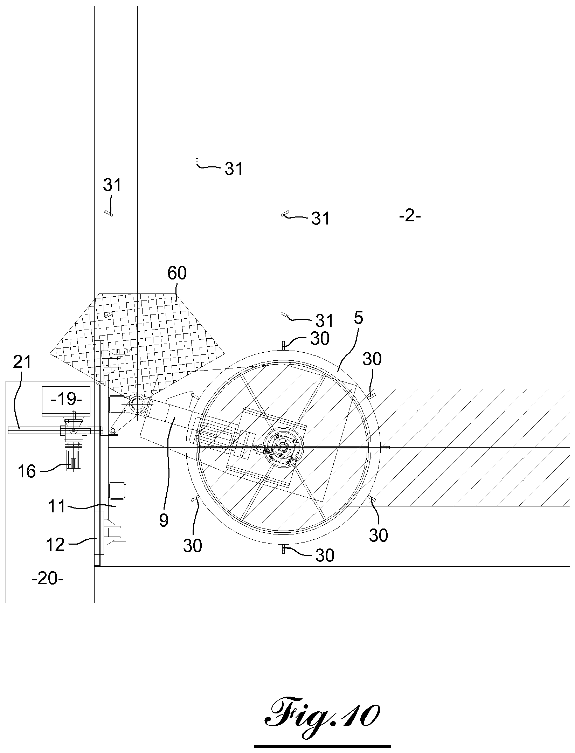

Les figures 3, 10 et 11 montrent qu'une plateforme horizontale 60 permettant le déplacement de personnes et des garde-corps de sécurité 61 sont montés sur la structure 24 en partie supérieure du bâti 6 et au-dessus de l'ensemble à moteur électrique 16, limiteur de couple 17 et bras de pivotement 23.

Avantageusement, au moins un joint annulaire d'étanchéité et de préférence deux joints annulaires, non représenté (s), est ou sont interposé (s) entre le fond 2 de la piscine 1 et le couvercle 5 occupant sa position de fermeture afin d'assurer une étanchéité entre ce couvercle et l'orifice 3. Chaque joint d'étanchéité peut être fixé sous le couvercle 5 ou sur le fond 2 de la piscine 1.

Le fonctionnement du dispositif de l'invention ressort déjà en partie de la description qui précède et va être maintenant expliqué.

On se placera tout d'abord dans les conditions de la figure 1 où le bâti 6 est positionné de manière que le mât vertical 40 soit disposé coaxialement au dessus de l'orifice 3 du fond de la piscine 1 avec le couvercle 5 occupant sa position de fermeture de cet orifice. A cette position correspondant également à celle de la figure 7, l'organe élastiquement déformable 50 exerce sur la partie inférieure 52 du mât 40 un effort axial de compression permettant de maintenir sous pression le couvercle 5 à sa position de fermeture de l'orifice 3, le joint annulaire d'étanchéité interposé entre le couvercle 5 et le bord périphérique circulaire de l'orifice 3 étant comprimé par l'organe élastiquement déformable 50 lui-même comprimé.

Pour désengager complètement le couvercle 5 de l'orifice 3, l'ensemble motoréducteur 41, 42 est activé pour provoquer le déplacement en translation verticale vers le haut de la vis 47 du vérin 45 et, par conséquent, provoquer le déplacement vers le haut du mât vertical.

Pendant le déplacement du mât vertical 40, il se produit une première phase pendant laquelle l'organe élastiquement déformable 50 va se détendre jusqu'à occuper la position de la figure 6 à laquelle l'effort de compression de cet organe sur le couvercle 5 est complètement relâché, le couvercle 5 restant encore en contact avec le fond 2 de la piscine 1. A cette position, le piston 54 vient en appui pendant la montée de la partie supérieure 51 du mât 50 contre un épaulement interne 56a du capuchon 56 solidaire de la partie d'extrémité supérieure de la partie inférieure 52 du mât 50. En outre, toujours à cette position, il y a un jeu quasi nul entre les rondelles ressort 50a de l'organe élastiquement déformable 50 et le piston 54. Ensuite intervient la deuxième phase de montée du mât vertical 40 pendant laquelle le couvercle 5 est soulevé au-dessus de l'orifice 3 à une hauteur déterminée comme cela est représenté en figure 3. Pendant cette seconde phase, les deux parties supérieure 51 et inférieure 52 du mât 50 forment un ensemble axialement unitaire de par la précontrainte exercée par l'organe élastiquement déformable 50.

L'ensemble motoréducteur 41, 42 est alors désactivé et le moteur électrique 16 est activé pour déplacer en translation la vis 21 du vérin 18 dans le sens permettant de faire pivoter le bras 23, et par conséquent, le bâti 6, dans le sens contraire des aiguilles d'une montre en considérant les figures 3 et 4 jusqu'à ce que le bâti 6 et le couvercle 5 occupent leur position de repos à laquelle au moins l'une des traverses 9, dans le cas présent la traverse inférieure, du bâti 6 vienne en appui sur la butée 27 solidaire de l'extrémité de la traverse murale inférieure 11. Ensuite, le moteur électrique 16 est désactivé et l'ensemble motoréducteur 41, 42 est à nouveau activé pour provoquer la descente du mât vertical 40 par l'intermédiaire de la vis 47 du vérin 45 jusqu'à ce que le couvercle 5 s'engage dans les pieds saillants 31 en appui sur le fond 2 de la piscine 1 à une position complètement en dehors de l'orifice 3 de ce fond. L'ensemble motoréducteur 41, 42 est alors désactivé.

L'orifice 3 est alors ouvert pour permettre à travers celui-ci le chargement de combustible irradié de la piscine 1 dans le conteneur situé en aplomb sous cet orifice.

Une fois ce chargement effectué, l'opération de fermeture de l'orifice 3 par le couvercle 5 s'effectue en activant tout d'abord l'ensemble motoréducteur 41,42 pour provoquer la montée du mât vertical 40 par l'intermédiaire de la vis 47 du vérin 45 jusqu'à ce que le couvercle 5 soit désengagé des pieds saillants 31 du fond 2 de la piscine 1 à une hauteur déterminée relativement à ce fond.

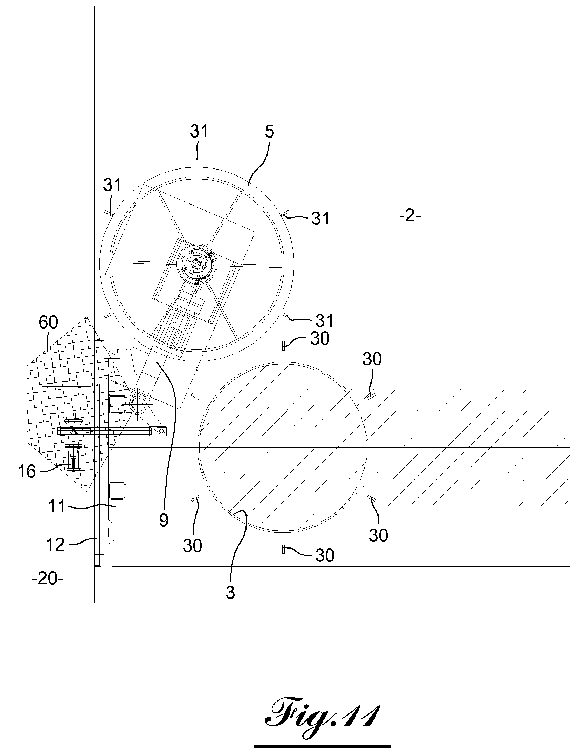

Ensuite, l'ensemble motoréducteur 41,42 est désactivé et le moteur électrique 16 est activé pour provoquer le pivotement du bâti 6 et du couvercle 5 dans le sens des aiguilles d'une montre en considérant la figure 11 jusqu'à ce que la traverse inférieure 9 du bâti 6 vienne en appui contre la butée 27, comme représenté en traits forts en figure 8, pour positionner le mât vertical 40 et le couvercle 5 au-dessus de l'orifice 3 sensiblement coaxialement à ce dernier.

Le moteur électrique 16 est alors désactivé et l'ensemble motoréducteur 41,42 est activé pour provoquer la descente du mât vertical 40 jusqu'à ce que le couvercle 5 s'engage dans les pieds saillants 30 du fond 2 de la piscine 1 et obture cet orifice par l'intermédiaire du ou des joint(s) annulaire(s) d'étanchéité. Pendant la descente du mât vertical 40, le piston 54 va comprimer l'organe élastiquement déformable 50 dans la chambre 53 de la partie inférieure 52 de ce mât pour arriver à la position représentée en figure 7 à laquelle cet organe exerce axialement une compression permettant d'appliquer une charge de compression au couvercle 5 occupant sa position de fermeture et, par conséquent, au joint annulaire d'étanchéité pour assurer de la sorte une étanchéité parfaite entre couvercle 5 et orifice 3.

L'ensemble motoréducteur 41,42 est alors désactivé pour maintenir la charge de compression de fermeture du couvercle 5.

Il est à noter que la fonction principale de l'organe élastiquement déformable 50 est de maintenir un effort sur le couvercle 5 indépendamment des variations de température d'environnement, air ou eau de la piscine 1.

En effet, une variation de température entraîne une variation de la longueur du mât 40. Dans le cas d'un mât 40 trop rigide, le contact entre le couvercle 5 et le fond 2 de la piscine 1 peut être perdu en cas d'une baisse de température.

Une variation de longueur du mât 40 entraîne une variation de la longueur de l'empilement des rondelles ressort 50a. Cette variation entraîne donc une variation d'effort sur le couvercle 5. Un tel dispositif est étudié afin d'assurer un effort de pression minimum sur le couvercle 5 en cas de température minimum ambiante.

De même, le dispositif est étudié afin de ne pas dépasser un effort de pression maximum admissible sur le couvercle 5 en cas de température maximum ambiante.

L'effort moyen, qui est l'effort nominal, est produit par le vérin 45 sur l'organe élastiquement déformable 50 via le mât 40 et finalement sur le couvercle 5. L'effort est mesuré au moyen d'un dispositif de mesure de déplacement situé sur le vérin 45 et connu en soi.

Il est également à noter que la motorisation de pivotement du bâti 6, lorsque désactivée, permet le blocage de ce bâti à sa position de repos ou à sa position à laquelle le couvercle 5 obture hermétiquement l'orifice 3 du fond 2 de la piscine 1.

Le dispositif ci-dessus décrit de l'invention présente les avantages suivants :
- les conditions de sécurité sont grandement améliorées car le risque de chute du couvercle sur l'assemblage de combustible irradié, par exemple en cas de séisme, est supprimé ;
- l'installation du dispositif est facilitée du fait qu'il y a moins de pièces à monter en piscine par rapport aux dispositifs antérieurement connus et la plupart des éléments constituant le dispositif de l'invention peuvent être facilement préfabriqués en usine ;
- la maintenance du dispositif est simplifiée car les organes mobiles sont situés majoritairement hors de l'eau de la piscine ; et
- le dispositif peut facilement être adapté en fonction des différentes configurations de la piscine.

## Revendications

1. Dispositif d'ouverture et de fermeture d'un orifice (3) du fond (2) d'une piscine (1) destinée à contenir du combustible irradié pouvant être transféré dans un conteneur situé sous l'orifice (3), comprenant un couvercle (5) et une structure (6) adaptée pour être logée dans la piscine (1) et permettant de déplacer le couvercle (5) entre une position de fermeture et une position d'ouverture de l'orifice (3), la structure comprenant un bâti (6) adapté pour être monté à pivotement commandé suivant un axe vertical (Y-Y') à une paroi (7) de la piscine (1) et supportant un mât vertical (40) portant à son extrémité inférieure le couvercle (5) et qui peut être commandé à déplacement verticalement guidé relativement au bâti de support (6), lorsque ce dernier occupe une position à laquelle le mât vertical (40) est sensiblement coaxial à l'orifice (3) au-dessus de ce dernier, entre une position basse à laquelle le couvercle (5) obture l'orifice (3) et une position haute à laquelle le couvercle (5) est soulevé à une position dégagée d'au-dessus de l'orifice (3).

2. Dispositif selon la revendication 1, **caractérisé en ce que** le bâti de support (6) peut être commandé pour pivoter avec le couvercle (5), lorsque ce dernier occupe sa position dégagée d'au-dessus de l'orifice (3), à une position de repos à laquelle le couvercle (5) est complètement désengagé de l'orifice ouvert (3).

3. Dispositif selon la revendication 2, **caractérisé en ce que** le bâti de support (6) peut être commandé pour pivoter avec le couvercle (5) à partir de sa position de repos à une position à laquelle le couvercle (5) est disposé au-dessus de l'orifice (3) et le mât (40) est commandé pour se déplacer verticalement vers le bas et plaquer le couvercle (5) sur le fond (2) de la piscine (1) pour obturer l'orifice (3).

4. Dispositif selon la revendication 2 ou 3, **caractérisé en ce qu'**en position de repos du bâti de support (6), le mât (40) peut être commandé pour se déplacer en translation verticalement vers le bas afin de disposer le couvercle (5) en appui sur le fond (2) de la piscine (1).

5. Dispositif selon l'une des revendications 1 à 4, **caractérisé en ce que** le mât (40) comporte un moyen (50) permettant d'exercer sur le couvercle (5) une pression de maintien du couvercle (5) à sa position de fermeture de l'orifice (3) de la piscine (1).

6. Dispositif selon la revendication 5, **caractérisé en ce que** le moyen de pression comprend un organe élastiquement déformable (50) logé dans le mât (40) coaxialement à celui-ci entre deux parties supérieure (51) et inférieure (52) du mât (40) et apte à exercer sur la partie inférieure (52) du mât (40) un effort axial de compression maintenant sous pression le couvercle (5) à sa position de fermeture de l'orifice (3).

7. Dispositif selon la revendication 6, **caractérisé en ce que** l'organe élastiquement déformable (50) est logé dans une chambre (53) de la partie inférieure (52) du mât (40) et en-dessous d'un piston (54) logé dans la chambre (53) et solidaire de la partie supérieure (51) du mât (40) .

8. Dispositif selon la revendication 6 ou 7, **caractérisé en ce que** l'organe élastiquement déformable (50) est constitué par un empilement de ressorts disques (50a) dans la chambre (53) de la partie inférieure (52) du mât (40).

9. Dispositif selon l'une des revendications 1 à 8, **caractérisé en ce que** les moyens de commande du pivotement du bâti de support (6) du mât vertical (40) comprennent un moteur électrique (16) solidaire d'un plancher (20) en partie supérieure de la piscine (1), un vérin à vis horizontal (18) accouplé au moteur électrique (16) et un bras horizontal de pivotement (23) solidaire en partie supérieure du bâti de support (6) du mât (40) et pouvant pivoter autour d'un axe vertical coaxial à l'axe de pivotement (Y-Y') du bâti de support (6) du mât (40), lequel bras de pivotement (23) est accouplé à une extrémité de la vis (21) du vérin (18), le moteur électrique (16) pouvant être activé pour entrainer en translation la vis (21) du vérin (18) et provoquer le pivotement du bâti de support (6) du mât (40) par l'intermédiaire du bras de pivotement (23).

10. Dispositif selon l'une des revendications 1 à 9, **caractérisé en ce que** les moyens de commande du déplacement vertical du mât (40) comprennent un moteur électrique (41) solidaire en partie supérieure du bâti de support (6) du mât (40), un vérin à vis vertical (45) accouplé au moteur électrique (41) et à l'extrémité supérieur du mât (40) coaxialement à ce dernier, le moteur électrique (41) pouvant être activé pour entrainer en translation la vis (47) du vérin (45) et provoquer le déplacement vertical du mât (40) relativement à son bâti de support (6) entre ses positions haute et basse.

11. **Dispositif** selon l'une des revendications 1 à 10, **caractérisé en ce que** le bâti de support (6) du mât (40) est monté pivotant par l'intermédiaire de chapes d'articulation (13) à des traverses horizontales (11) réparties sur la hauteur de la paroi verticale (7) de la piscine (1) en étant solidaires de cette paroi.

12. **Dispositif** selon l'une des revendications 2 à 11, **caractérisé en ce qu'**au moins l'une des traverses (11) comprend deux butées réglables (27) de limitation du pivotement du bâti de support (6) du mât (40) respectivement à ses deux positions de repos et de disposition du mât (40) coaxialement à l'orifice (3) de la piscine (1).

13. **Dispositif** selon l'une des revendications 1 à 12, **caractérisé en ce que** le fond (2) de la piscine (1) comprend des pieds saillants (30) disposés sur le bord périphérique de l'orifice (3) de la piscine (1) et dans lesquels s'engage le couvercle (5) à sa position de fermeture de cet orifice.

14. Dispositif selon l'une des revendications 2 à 13, **caractérisé en ce que** le fond (2) de la piscine (1) comprend des pieds saillants (31) dans lesquels s'engage le couvercle (5) à sa position de repos hors de l'orifice (3) .

## Patentansprüche

1. Vorrichtung zum Öffnen und Schließen einer Öffnung (3) am Boden (2) eines Beckens (1) zum Einschließen abgebrannter Brennelemente, die in einen unter der Öffnung (3) angeordneten Behälter überführt werden können, umfassend einen Deckel (5) und eine Struktur (6), die zum Unterbringen im Becken (1) geeignet ist und die Verschiebung des Deckels (5) zwischen einer geschlossenen Stellung und einer geöffneten Stellung der Öffnung (3) ermöglicht, wobei die Struktur eine Baueinheit (6) umfasst, die dazu geeignet ist, um eine vertikale Achse (Y - Y') schwenkend auf einer Wand (7) des Beckens (1) montiert zu werden, und eine vertikale Stange (40) unterstützt, die an ihrem unteren Ende den Deckel (5) trägt, und die in Bezug auf die Baueinheit (6) unter Führung vertikal verschiebbar ist, wenn sich diese in einer Stellung befindet, in der die vertikale Stange (40) im Westentlichen koaxial zur Öffnung (3) und oberhalb von dieser angeordnet ist, zwischen einer tiefen Stellung, in der der Deckel (5) die Öffnung (3) verschließt, und einer hohen Stellung, in der der Deckel (5) sich in einer angehobenen Stellung oberhalb der Öffnung (3) befindet.

2. Vorrichtung nach Anspruch 1, **dadurch gekennzeichnet, dass** die Baueinheit (6) derart angesteuert werden kann, dass sie sich mit dem Deckel (5) in eine Ruhestellung, in der der Deckel (5) nicht mehr in die geöffnete Öffnung (3) eingreift, schwenkt, wenn letzterer sich in der angehobenen Stellung über der Öffnung (3) befindet.

3. Vorrichtung nach Anspruch 2, **dadurch gekennzeichnet, dass** die Baueinheit (6) derart angesteuert werden kann, dass sie sich mit dem Deckel (5) von der Ruhestellung in eine Stellung schwenken kann, in der der Deckel (5) oberhalb der Öffnung (3) angeordnet ist und die Stange (40) derart angesteuert wird, dass sie sich vertikal nach unten bewegt und den Deckel (5) am Boden (2) des Beckens (1) sichert, um die Öffnung (3) zu verschließen.

4. Vorrichtung nach Anspruch 2 oder 3, **dadurch gekennzeichnet, dass**, wenn sich die Baueinheit (6) in der Ruhestellung befindet, die Stange (40) derart angesteuert werden kann, dass sie sich vertikal nach unten bewegt, um den Deckel (5) auf den Boden (2) des Beckens (1) aufzulegen.

5. Vorrichtung nach einem der Ansprüche 1 - 4, **dadurch gekennzeichnet, dass** die Stange (40) ein Mittel (50) umfasst, das es ermöglicht, einen Nachdruck auf den Deckel (5) auszuüben, um diesen in der Schließungsstellung zum Schließen der Öffnung (3) des Beckens (1) zu halten.

6. Vorrichtung nach Anspruch 5, **dadurch gekennzeichnet, dass** das Druckmittel ein elastisch verformbares Element (50) umfasst, der in der Stange (40) koaxial mit dieser zwischen einem oberen Teil (51) und einem unteren Teil (52) der Stange (40) angeordnet und dazu geeignet ist, auf den unteren Teil (52) der Stange (40) eine axiale Druckbeanspruchung auszuüben, um den Deckel (5) in dessen Schließungsstellung (3) zum Schließen der Öffnung (3) zu halten.

7. Vorrichtung nach Anspruch 6, **dadurch gekennzeichnet, dass** das elastisch verformbare Element (50) in einer Kammer (53) des unteren Teils (52) der Stange (40) und unterhalb eines in der Kammer (53) angeordneten, mit dem oberen Teil (51) der Stange (40) fest verbundenen Kolbens (54) angeordnet ist.

8. Vorrichtung nach Anspruch 6 oder 7, **dadurch gekennzeichnet, dass** das elastisch verformbare Element (50) aus einem Stapel von Tellerfedern (50a) in der kammer (53) des unteren Teils (52) der Stange (40) besteht.

9. Vorrichtung nach einem der Ansprüche 1 - 8, **dadurch gekennzeichnet, dass** die Steuermittel zur Schwenkung der Baueinheit (6) der vertikalen Stange (40) umfassen: einen Elektromotor (16), der mit einem Boden (20) des oberen Teils des Becken (1) fest verbunden ist, eine horizontale Gewindespindel (18), die mit dem Elektromotor (16) gekuppelt ist, und einen horizontalen Schwenkarm (23), der mit dem oberen Teil der Baueinheit (6) der Stange (40) fest verbunden ist und sich um eine vertikale Achse schwenken kann, die der Schwenkachse (Y - Y') der Baueinheit (6) der Stange (40) koaxial ist, wobei der Schwenkarm (23) mit einem Ende der Schraube (21) der Gewindespindel (18) gekuppelt ist, wobei der Elektromotor (16) aktiviert werden kann, um die Schraube (21) der Gewindespindel (18) zu verschieben und die Baueinheit (6) der Stange (40) über den Schwenkarm (23) zum Schwenken zu bringen.

10. Vorrichtung nach einem der Ansprüche 1 - 9,
**dadurch gekennzeichnet, dass** die Steuermittel zur vertikalen Verschiebung der Stange (40) umfassen: einen Elektromotor (41), der mit dem oberen Teil der Baueinheit (6) der Stange (40) fest verbunden ist, eine horizontale Gewindespindel (45), die mit dem Elektromotor (41) und dem oberen Teil der Stange (40) koaxial zu dieser gekuppelt ist, wobei der Elektromotor (41) aktiviert werden kann, um die Schraube (47) der Gewindespindel (45) zu verschieben und die Stange (40) zwischen ihrer hohen und tiefen Stellung relativ zur Baueinheit (6) vertikal zu bewegen.

11. Vorrichtung nach einem der Ansprüche 1 - 10, **dadurch gekennzeichnet, dass** die Baueinheit (6) der Stange (40) über Gelenkflächen (13) schwenkbar auf horizontalen Traversen (11) montiert ist, die über die Höhe der vertikalen Wand (7) des Beckens (1) verteilt und mit dieer fest verbunden sind.

12. Vorrichtung nach einem der Ansprüche 2 - 11, **dadurch gekennzeichnet, dass** mindestens eine der Traversen (11) zwei verstellbare Anschläge (27) zur Begrenzung der Schwenkung der Baueinheit (6) der Stange (40) auf die Ruhe- und Einsatzstellungen koaxial zur Öffnung (3) des Beckens (1) umfasst.

13. Vorrichtung nach einem der Ansprüche 1 - 12, **dadurch gekennzeichnet, dass** der Boden (2) des Beckens (1) hervorstehende Füße (30) umfasst, die auf dem Umfang der Öffnung (3) des Beckens (1) angeordnet sind und in die der Deckel (5) in ihrer Schließungsstellung eingreift.

14. Vorrichtung nach einem der Ansprüche 2 - 13, **dadurch gekennzeichnet, dass** der Boden (2) des Beckens (1) hervorstehende Füße (31) umfasst, in die der Deckel (5) in ihrer Ruhestellung außerhalb der Öffnung (3) eingreift.

## Claims

1. A device for opening and closing an opening (3) in the bottom (2) of a pool (1) intended for containing irradiated fuel able to be transferred into a container located below the opening (3), comprising a cover (5) and a structure (6) suitable for being housed in the pool (1) and making it possible to move the cover (5) between a closed position and an open position of the opening (3), the structure comprising a frame (6) suitable for being mounted with controlled pivoting along a vertical axis (Y-Y') on a wall (7) of the pool (1) and supporting a vertical mast (40) bearing the cover (5) at its lower end and which can be controlled in vertically guided movement relative to the support frame (6), when the latter occupies a position in which the vertical mast (40) is substantially coaxial to the opening (3) above the latter, between a low position in which the cover (5) closes off the opening (3) and a high position in which the cover (5) is raised to a cleared position above the opening (3).

2. The device according to claim 1, **characterized in that** the support frame (6) can be controlled to pivot with the cover (5), when the latter occupies its cleared position above the opening (3), to an idle position in which the cover (5) is completely disengaged from the open opening (3).

3. The device according to claim 2, **characterized in that** the support frame (6) can be controlled to pivot with the cover (5) from its idle position to a position in which the cover (5) is arranged above the opening (3) and the mast (40) is controlled to move vertically downward and press the cover (5) on the bottom (2) of the pool (1) in order to close the opening (3) .

4. The device according to claim 2 or 3, **characterized in that** in the idle position of the support frame (6), the mast (40) can be controlled to move in translation vertically downward in order to arrange the cover (5) bearing on the bottom (2) of the pool (1).

5. The device according to one of claims 1 to 4, **characterized in that** the mast (40) includes a means (50) making it possible to exert, on the cover (5), a pressure keeping the cover (5) in its position closing the opening (3) of the pool (1) .

6. The device according to claim 5, **characterized in that** the pressure means comprises a resiliently deformable member (50) housed in the mast (40) coaxially thereto between two upper (51) and lower (52) parts of the mast (40) and able to exert, on the lower part (52) of the mast (40), an axial compression force keeping the cover (5) under pressure in its position closing the opening (3).

7. The device according to claim 6, **characterized in that** the resiliently deformable member (50) is housed in a chamber (53) of the lower part (52) of the mast (40) and below a piston (54) housed in the chamber (53) and secured to the upper part (51) of the mast (40).

8. The device according to claim 6 or 7, **characterized in that** the resiliently deformable member (50) is made up of a stack of disc springs (50a) in the chamber (53) of the lower part (52) of the mast (40).

9. The device according to one of claims 1 to 8, **characterized in that** the control means for the pivoting of the support frame (6) of the vertical mast (40) comprise an electric motor (16) secured to a floor (20) in the upper part of the pool (1), a horizontal jackscrew (18) coupled to the electric motor (16) and a horizontal pivot arm (23) secured in the upper part of the support frame (6) of the mast (40) and able to pivot around a vertical axis coaxial to the pivot axis (Y-Y') of the support frame (6) of the mast (40), said pivot arm (23) being coupled to one end of the screw (21) of the jack (18), the electric motor (16) being able to be activated to translate the screw (21) of the jack (18) and to cause the pivoting of the support frame (6) of the mast (40) by means of the pivot arm (23) .

10. The device according to one of claims 1 to 9, **characterized in that** the means for controlling the vertical movement of the mast (40) comprises an electric motor (41) secured in the upper part of the support frame (6) of the mast (40), a vertical jackscrew (45) coupled to the electric motor (41) and to the upper end of the mast (40) coaxially thereto, the electric motor (41) being able to be activated to translate the screw (47) of the jack (45) and to cause the vertical movement of the mast (40) relative to its support frame (6) between its high and low positions.

11. The device according to one of claims 1 to 10, **characterized in that** the support frame (6) of the mast (40) is mounted pivoting by means of articulation yokes (13) with horizontal crosspieces (11) distributed over the height of the vertical wall (7) of the pool (1) while being secured to this wall.

12. The device according to one of claims 2 to 11, **characterized in that** at least one of the crosspieces (11) comprises two adjustable stops (27) for limiting the pivoting of the support frame (6) of the mast (40) respectively in its idle position and its position arranging the mast (40) coaxially to the opening (3) of the pool (1).

13. The device according to one of claims 1 to 12, **characterized in that** the bottom (2) of the pool (1) comprises protruding feet (30) arranged on the peripheral edge of the opening (3) of the pool (1) and in which the cover (5) engages in its position closing this opening.

14. The device according to one of claims 2 to 13, **characterized in that** the bottom (2) of the pool (1) comprises protruding feet (31) in which the cover (5) engages in its idle position outside the opening (3).
